# EUROPÄISCHE PATENTSCHRIFT

(11) **EP 1 076 073 B1**
(45) Veröffentlichungstag und Bekanntmachung des Hinweises auf die Patenterteilung: **15.01.2003**
(21) Anmeldenummer: 00111075.8
(22) Anmeldetag: 02.06.2000
(51) Int. Cl.: C08G 77/46, B01D 19/04

(54) **Entschäumerformulierung**
Defoaming composition
Composition anti-mousse

(30) Priorität: 02.08.1999 DE 19936289
(43) Veröffentlichungstag der Anmeldung: 14.02.2001
(73) Patentinhaber: Wacker-Chemie GmbH, 81737 München (DE)
(72) Erfinder: Rautschek, Holger, Dr., 01612 Nünchritz (DE); Burger, Willibald, Dr., 84489 Burghausen (DE); Wimmer, Josef, 84489 Burghausen (DE); Zscheile, Erika, 01612 Leckwitz (DE); Wolf, Christine, 01619 Röderau-Bobersen (DE)
(74) Vertreter: Fritz, Helmut, Dr.

(56) Entgegenhaltungen:
- EP-A- 0 716 115
- EP-A- 0 896 015
- DE-A- 19 836 260
- US-A- 5 032 662

## Beschreibung

Die Erfindung betrifft Entschäumerformulierungen, enthaltend (A) Antischaummittel auf Basis von Siloxanen und (B) Polyether-Polysiloxan-Copolymere, sowie deren Anwendung zum Entschäumen von, insbesondere den bei der Zellstoffherstellung anfallenden, wässrigen Medien.

In vielen flüssigen, insbesondere wässrigen Systemen, die als erwünschte oder auch unerwünschte Bestandteile oberflächenaktive Verbindungen enthalten, können durch Schaumbildung Probleme auftreten, wenn diese Systeme in mehr oder weniger intensiven Kontakt mit gasförmigen Stoffen gebracht werden, beispielsweise beim Begasen von Abwässern, beim intensiven Rühren von Flüssigkeiten, bei Destillations-, Wasch- oder Färbeprozessen oder bei Abfüllvorgängen.

Die Bekämpfung dieses Schaumes kann auf mechanischem Wege oder durch den Zusatz von Entschäumern erfolgen. Dabei haben sich Entschäumer auf Siloxanbasis besonders bewährt.

Entschäumer auf Basis von Siloxanen werden beispielsweise nach DD 056 762 durch Erhitzen von hydrophiler Kieselsäure in Polydimethylsiloxanen hergestellt. Dieses Verfahren ist recht aufwendig, trotzdem ist die Wirksamkeit der so hergestellten Entschäumer nicht zufriedenstellend. Die Verteilung von hydrophobierter Kieselsäure in einem Polydimethylsiloxan, z. B. entsprechend DE 29 25 722, ist ein rationelleres Verfahren, die Wirksamkeit der erhaltenen Entschäumer aber ebenfalls verbesserungswürdig.

Bekannt ist ebenfalls die Verwendung von modifizierten Polyorganosiloxanen in Entschäumerzubereitungen. So wird z. B. die Verwendung von verzweigten Siloxanentschäumern in Kombination mit Polyether-Polysiloxan-Copolymeren als Entschäumer z.B. für die Zellstoffherstellung empfohlen (EP 341 952, US 5,380,646, JP 87323107). Auch in Kombination mit Mineralölen als Trägeröl sollen Polyether-Polysiloxan-Copolymere einen positiven Effekt haben (US 5,523,019). Gemäß WO 98/000216 sollen als Tenside in Entschäumerformulierungen Siloxane mit Dimethyl-3-hydroxypropylpolyoxyethylenpolyoxypropylengruppen besonders geeignet sein.

In EP 663 225 werden vernetzte Polyorganosiloxane, welche mindestens eine Polyethergruppierung tragen, als eine der beiden Komponenten einer Entschäumerformulierung beansprucht. Die Vernetzung erfolgt dabei über Alkylengruppen oder über Polydimethylsiloxane. Durch die Verknüpfung über Si-C Bindungen sind die Produkte hydrolysestabil. Im Gegensatz dazu führt das in DE 44 11 079 vorgeschlagene Verfahren auch zu Verknüpfungen über Si-O-C-Gruppen, die insbesondere in sauren oder basischen Medien nicht hydrolysestabil sind und somit im schäumenden wässrigen Medium ihre Wirksamkeit verlieren.

Die Aufgabe der Erfindung bestand deshalb darin, Entschäumerformulierungen auf der Basis von Siloxanen vorzuschlagen, welche insbesondere in stark schäumenden, heißen, alkalischen Medien, welche beispielsweise bei der Zellstoffherstellung anfallen, eine verbesserte Wirksamkeit aufweisen.

Diese Aufgabe wird gelöst, indem zu bekannten Antischaummitteln auf Basis von Siloxanen spezielle verzweigte Polyether-Polysiloxan-Copolymere zugesetzt werden.

Gegenstand der Erfindung sind Entschäumerformulierungen auf der Basis von Siloxanen, enthaltend
(A) Antischaummittel auf der Basis von Siloxanen und
(B) 0,1 bis 40 Gew % eines Polyether-Polysiloxan-Copolymers der allgemeinen Formel 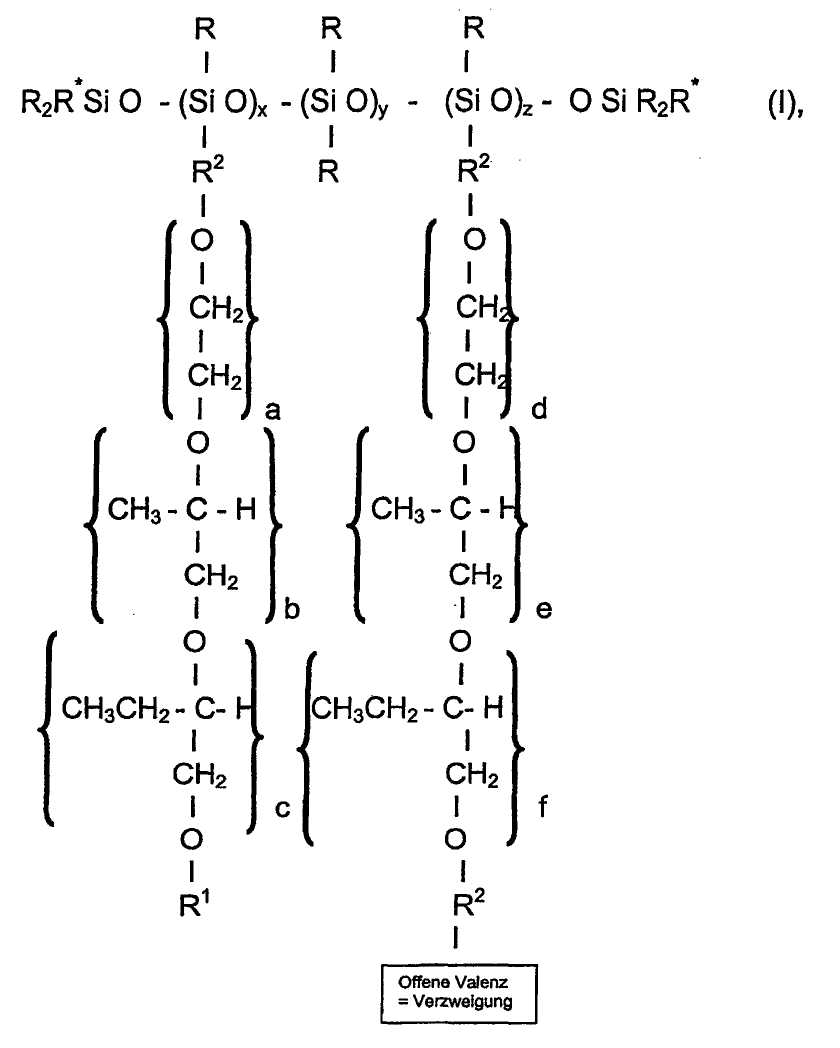
worin R unabhängig voneinander, gleiche oder verschiedene, substituierte und/oder unsubstituierte Kohlenwasserstoffreste mit 1 bis 30 Kohlenstoffatomen, R* entweder R oder eine der Gruppierungen

- R¹O-(CH₂CH₂O)ₐ [CH₂CH(CH₃)O]_{b} [H₂CH(CH₂CH₃)O]_{c}- R²-

-R²-O-(CH₂CH₂O)_{d} [CH₂CH(CH₃)O]ₑ [CH₂CH(CH₂CH₃)O]_{f}- R²-

und R¹ entweder Wasserstoff oder einen Alkyl-, Aralkyl-, Aryl-, R-C(O)-Rest bedeuten, x einen Wert von 0,1 bis 200, y einen Wert von 1 bis 1000 sowie z einen Wert von 0,01 bis 2,0 annimmt und a, b, c, d, e und f Werte zwischen 0 und 1000 mit der Maßgabe annehmen, dass die Summe aus (a+b+c) und die Summe aus (d+e+f) einen Wert von 2 bis 2000 hat, und R² einen Alkylenrest mit 2 bis 10 Kohlenstoffatomen bedeutet und die offene Valenz wiederum mit einer der Gruppierungen 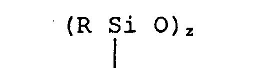 eines Polyether-Polysiloxan-Copolymers der allgemeinen Formel (I) verknüpft ist.

Für die Wirksamkeit der erfindungsgemäßen Entschäumerformulierung ist das verwendete Polyether-Polysiloxan-Copolmer von ausschlaggebender Bedeutung.

Vorzugsweise nehmen im Polyether-Polysiloxan-Copolymer der allgemeinen Formel (I) a und b Werte zwischen 5 und 50; c, d und f den Wert 0, e einen Wert von 20 bis 150, x einen Wert von 1 bis 10, y einen Wert von 3 bis 100 und z einen Wert von 0,5 bis 1,5 an. R* ist vorzugsweise R.

Es ist üblich, Polyether-Polysiloxan-Copolymere aufgrund ihres Tensidcharakters durch den Trübungspunkt zu charakterisieren. Die in den erfindungsgemäßen Entschäumerformulierungen eingesetzten Polyether-Polysiloxan-Copolymere weisen bevorzugt einen Trübungspunkt kleiner 15 °C auf, wobei der Trübungspunkt vorzugsweise in einer Lösung bestimmt wird, die 10 Gew.-% des Copolymeren und 25 Gew.-% Diethylenglycolmonobutylether in Wasser enthält. Das bedeutet weiterhin, dass das eingesetzte Polyether-Polysiloxan-Copolymer bei Raumtemperatur in Wasser nicht klar löslich sein muss.

Die Herstellung der bei Raumtemperatur flüssigen Polyether-Polysiloxan-Copolymere der allgemeinen Formel (I) erfolgt beispielsweise durch Umsetzung von
(ba) siliciumorganischen Verbindungen der allgemeinen Formel,

   (R₂R**SiO)₂ (HRSiO)_{x+z} (R₂SiO)_{y} (III),

   worin R sowie x, y und z die oben angegebene Bedeutung aufweisen und R** entweder R oder H bedeutet,
(bb) organischen Verbindungen der allgemeinen Formel

   R¹-O-(CH₂CH₂O)ₐ [CH₂CH(CH₃)O]_{b} [CH₂CH(CH₂CH₃)O]_{c} -R⁵ (IV),

   und
(bc) organischen Verbindungen der allgemeinen Formel

   R⁵-O-(CH₂CH₂O)_{d} [CH₂CH(CH₃)O]ₑ [CH₂CH(CH₂CH₃)O]_{f} -R⁵ (V),
worin R¹, a, b, c, d, e und f die oben angegebene Bedeutung aufweisen und R⁵ eine Alkenylgruppe der Formel -CₘH₍₂ₘ₋₁₎ mit 2 bis 10 Kohlenstoffatomen ist, wobei m einen Wert von 3 bis 10, bevorzugt gleich 3, annimmt, z. B. eine Vinyl- oder Allylgruppe, und wobei das Verhältnis der Anzahl der Si-H Funktionen in Formel (III) zur Anzahl der Alkenylgruppen R⁵ in den Formeln (IV) und (V) kleiner/gleich 1 ist und die Umsetzung in Gegenwart eines Hydrosilylierungsreaktionen fördernden Katalysators erfolgt.

Verbindungen der allgemeinen Formel (III) sind fließfähige Siloxane, deren Viskosität durch die Summe der durchschnittlichen Anzahl der HRSiO- und R₂SiO-Gruppen im Molekül bestimmt wird. Diese Verbindungen und ihre Synthese sind allgemein bekannt. Beispielsweise können die wasserstofffunktionellen Polyorganosiloxane der allgemeinen Formel (III) mit statistischer Verteilung der H-Si-Bindungen durch Cohydrolyse von Methylchlorsilanen, beispielsweise aus MeSiHCl₂, Me₂SiHCl, Me₂SiCl₂, Me₃SiCl und MeSiCl₃ hergestellt werden. Weiterhin ist es möglich, wasserstofffunktionelle Polyorganosiloxane durch saure Äquilibrierung von Hexamethyldisiloxan und Gemischen verschiedener Cyclen, beispielsweise cyclische Methylhydrogensiloxane und cyclische Dimethylsiloxane, oder durch Äqulibrierung von linearen oligomeren und/oder polymeren Siloxanen, wobei ein Reaktionpartner seitenständige und gegebenenfalls auch endständige Si-H Gruppen aufweist, zu erhalten.

In der allgemeinen Formel (I) und (III) sind als Reste R Alkylreste mit 1 bis 6 Kohlenstoffatomen, wie Methyl, Ethyl, n-Propyl, i-Propyl, Butyl oder Hexyl, oder längerkettige Alkylreste, wie Octyl, Decyl, Dodecyl, Octadecyl, cyclische Kohlenwasserstoffreste, wie Cyclopentyl, Cyclohexyl, Cyclooctyl, aromatische Kohlenwasserstoffreste, wie Arylgruppen, wie z. B. Phenyl, Naphtyl, Styryl und Cumylreste, bevorzugt. Weiterhin können die Kohlenwasserstoffgruppen durch Halogene oder andere Substituenten modifiziert sein, wie z. B. 3,3,3-Trifluorpropyl, Chlormethyl, Cyanoethyl, und 4-Chlorphenyl. Besonders bevorzugte Reste R sind Methylgruppen.

Die Summe (x+z) in der allgemeinen Formel (III) nimmt beispielsweise Werte zwischen 1,1 und 202, bevorzugt zwischen 1,5 und 11,5 an. Die -HRSiO- Gruppen sind dabei statistisch über das Molekül verteilt. Der Wert für y in der allgemeinen Formel (III) beträgt üblicherweise 1 bis 1000 bevorzugt von 3 bis 100.

Die organischen Verbindungen der allgemeinen Formeln (IV) und (V) werden als Polyether oder Polyoxyalkylene bezeichnet. Diese Verbindungsgruppe ist bekannt. Üblicherweise werden sie durch Polymerisation von Ethylenoxid und/oder Propylenoxid und/oder Butylenoxid hergestellt, wobei die Alkylenoxideinheiten entweder statistisch verteilt oder als Blockcopolymerisate vorliegen können. Die Polyether der allgemeinen Formeln (IV) und (V) können aus nur einem Alkylenoxid oder durch Copolymerisation aus von zwei oder drei der genannten Alkylenoxide hergestellt werden. Je nach Verfahren werden dabei statistisch verteilte Copolymere oder Blockcoploymere erhalten, wobei statistisch verteilte Polyether bevorzugt sind. Die zur Herstellung der in den erfindungsgemäßen Entschäumerformulierungen enthaltenen Polyether-Polysiloxan-Copolymere verwendeten Polyether der allgemeinen Formeln (IV) und (V) weisen mindestens zwei Polyoxyalkyleneinheiten, üblicherweise nicht mehr als 200 Polyoxyalkyleneinheiten, bevorzugt nicht mehr als 150 Polyoxyalkyleneinheiten, auf. Der Rest R¹ in den allgemeinen Formeln (I) und (IV) ist z. B. Ethyl, n-Propyl, i-Propyl, Hexyl, Decyl, Dodecyl, 2-Phenylethyl, bevorzugt Wasserstoff, Methyl, Butyl und Acetyl.

Die zur Herstellung eingesetzten Gewichtsanteile der Verbindungen (III), (IV) und (V) werden in Abhängigkeit vom gewünschten Polyether-Polysiloxan-Copolymer der allgemeinen Formel (I) ausgewählt und erlauben dem Fachmann auf einfache Weise das durchschnittliche Molekulargewicht und die Viskosität zu kontrollieren und entsprechend den gewünschten Erfordernissen einzustellen. Die eingesetzten Gewichtsanteile an Verbindung (IV) und Verbindung (V) und die damit festgelegten Molekülverhältnisse bestimmen die Koeffizienten x und z in der allgemeinen Formel (I).

Die Verbindungen der allgemeinen Formeln (III), (IV) und (V) werden in Gegenwart von Hydrosilylierungsreaktionen fördernden Katalysatoren umgesetzt, wobei das Verhältnis der Anzahl der Si-H-Gruppen in der Verbindung der allgemeinen Formel (III) zur Anzahl der aus den Verbindungen der allgemeinen Formeln (IV) und (V) stammenden terminalen Alkylengruppen kleiner/gleich 1 ist. Sind die Verbindungen der allgemeinen Formeln (III), (IV) und (V) untereinander nicht mischbar bzw. ist die Mischviskosität zu hoch, ist es sinnvoll, ein Lösemittel oder einen Lösungsvermittler einzusetzen. Dazu werden bevorzugt aprotische Lösemittel, z. B. Benzol, Xylol oder gesättigte Kohlenwasserstoffe, insbesondere aber aromatische Lösemittel, wie Toluol, verwendet.

Als Katalysatoren, die Hydrosilylierungsreaktionen fördern, sind Verbindungen oder Komplexe der Metalle der 8. Nebengruppe des Periodensystems der Elemente bevorzugt, insbesondere des Platins und des Rhodiums, z. B. die als Speier-Katalysator bekannte Platin-Verbindung (Hexachloroplatinsäure gelöst in i-Propanol), mit oder ohne Zusatz von Lösemitteln, der sog. Lamoreaux-Katalysator (Hexachloroplatinsäure in Ethanol) oder die Gruppe der Karstedt-Katalysatoren (Vinylsiloxan-Platin-Komplexe), aber auch der Wilkinson-Katalysator (Vinylsiloxan-Platin-chloro-triphenylphosphin-Komplex). Es ist möglich, den Hydrosilylierungskatalysator auf einem Träger zu fixieren, z. B. in kolloidaler Form auf Aktivkohle. Weiterhin können zur Steuerung der Reaktionsgeschwindigkeit bekannte Inhibitoren, wie Alkinole eingesetzt werden.

Die Hydrosilylierungskatalysatoren werden in Konzentrationen von 0,1 bis 100 ppm, bevorzugt 2 bis 50 ppm, besonders bevorzugt von 4 bis 20 ppm, bezogen auf die Gesamtmenge an Ausgangsstoffen eingesetzt.

Die Temperaturen während der Herstellung der Polyether-Polysiloxan-Copolymere betragen bis zu 300 °C. Temperaturen von 50 bis 120 °C sind bevorzugt. Die Reaktionszeit beträgt zwischen 1 min und 20 h. Der Umsetzungsgrad kann an der Menge des basisch abspaltbaren Wasserstoffs von nicht umgesetzten Si-H-Gruppen bestimmt werden. Die Umsetzung ist abgeschlossen, wenn kein abspaltbarer Wasserstoff mehr nachweisbar ist, oder die Konzentration von restlichen Wasserstoff nicht mehr weiter vermindert werden kann.

Die erfindungsgemäßen Entschäumerformulierungen enthalten bevorzugt
(A) 1 bis 90 Gew-% Antischaummittel auf Basis von Siloxanen,
(B) 0,1 bis 20 Gew.-% des Polyether-Polysiloxan-Copolymeren der allgemeinen Formel (I),
(C) 0 bis 20 Gew.-%, vorzugsweise 2 bis 20 Gew.-% Emulgatoren,
(D) Wasser, Konservierungsmittel, Verdicker und weitere
(E) Zusätze.

Als Antischaummmittel auf Basis von Siloxanen (im Weiteren auch mit Siloxanentschäumer bezeichnet) wird üblicherweise eine Mischung aus Kieselsäure und Polyorganosiloxanen verwendet, wobei die Mischung bevorzugt
(aa) 1 bis 15 Gew.-% einer in situ hydrophobierten, gefällten und/oder pyrogenen Kieselsäure mit einer BET-Oberfläche größer 50 g/m² und/oder einer vorbehandelten, hydrophoben, gefällten und/oder pyrogenen Kieselsäure mit einer BET-Oberfläche größer 50 g/m²,
(ab) 20 bis 99 Gew.-% eines oder mehrerer Polyorganosiloxane der allgemeinen Formel

   R³ ₘ(R⁴O)ₙ SiO_{(4-n-m)/2} (II),

   worin R³ unabhängig voneinander, gleiche oder verschiedene, substituierte undund/oder unsubstituierte gesättigte und/oder ungesättigte Kohlenwasserstoffreste mit 1 bis 30 Kohlenstoffatomen und R⁴ unabhängig voneinander Wasserstoff oder substituierte und/oder unsubstituierte gesättigte und/oder ungesättigte Kohlenwasserstoffreste mit 1 bis 30 Kohlenstoffatomen bedeutet, n einen durchschnittlichen Wert kleiner 0,5 und die Summe (n+m) einen Wert von 1,8 bis 2,4 aufweist,
(ac) 0 bis 10 Gew.-% eines Siliconharzes, welches im Wesentlichen aus Einheiten der allgemeinen Formel R³SiO_{1/2} und SiO_{4/2} besteht, und
(ad) 0 bis 80 Gew.-% einer organischen Verbindung mit einem Siedepunkt größer als 100 °C, ausgewählt aus Mineralölen, nativen Ölen, Isoparaffinen, Polyisobutylenen, Rückständen aus der Oxoalkoholsynthese, Estern niedermolekularer synthetischer Carbonsäuren, Ethern niedermolekularer Alkohole, Phtalaten und Estern der Phosphorsäure,
enthält.

Die in situ Hydrophobierung der Kieselsäure (aa) kann durch mehrstündiges Erhitzen der im Polyorganosiloxan (ab) dispergierten Kieselsäure auf Temperaturen von 100 bis 200 °C erfolgen. Dabei kann die Reaktion durch den Zusatz von Katalysatoren, wie KOH, und von Hydrophobiermitteln, wie kurzkettigen OH-terminierten Polydimethylsiloxanen, Silanen, Silazanen oder Siliconharzen, unterstützt werden. Als Alternative können vorbehandelte, hydrophobierte Kieselsäuren zum Einsatz kommen, oder aber auch eine Kombination von in situ hydrophobierten Kieselsäuren mit vorbehandelten hydrophobierten Kieselsäuren.

Als Polyorganosiloxan (ab) ist insbesondere solches bevorzugt, bei dem die Reste R³ in der allgemeinen Formel (II) unsubstituierte, verzweigte oder unverzweigte Alkylgruppen sind, beispielsweise Methyl-, Ethyl-, Propyl-, Isopropyl-, Hexyl-, 2-Ethylhexyl, Octyl-, oder Dodecylgruppen, substituierte Alkylgruppen, wie Trifluorpropyl-, Cyanoethyl-, Glycidoxypropyl-, Polyalkylenglycolpropyl-, Aminopropyl- oder Aminoethylaminopropylgruppen, ungesättigte Reste, wie Vinyl-, Methacryloxypropyl- oder Allylreste, aromatische Reste, wie Phenyl-, Toloyl-, Xylyl-, Naphtyl-, Anthracyl- oder Benzylreste. Besonders bevorzugte Reste R³ sind Methyl- oder Phenylgruppen, wobei es besonders bevorzugt ist, wenn mehr als 80 Mol-% der Reste R³ Methylgruppen sind.

Beispiele für Verbindungen der Formel (II) sind Polydimethylsiloxane mit Viskositäten bei 25 °C von 100 bis 1.000.000 mPas. Diese Polydimethylsiloxane können z. B. durch den Einbau von MeSiO_{3/2}- oder SiO_{4/2}-Einheiten verzweigt oder anvernetzt sein. Diese verzweigten oder anvernetzten Siloxane weisen dann viskoelastische Eigenschaften auf.

Derartige verzweigte viskoelastische Polyorganosiloxane können beispielsweise erhalten werden durch Umsetzung des Dimethyldichlorsilan-Hydrolyseproduktes oder von hydroxyterminierten Polydimethylsiloxanen mit einem trimethylsilylterminerten Polydimethylsiloxan und einer Verbindung, ausgewählt aus einem Silan mit mindestens drei hydrolysierbaren Gruppen, wie Tetraethoxysilan, Methyltrimethoxysilan oder Methyltriacetoxysilan, oder einem Siliconharz, welches im Wesentlichen aus (CH₃)₃SiO_{1/2}- und SiO₂-Einheiten im Verhältnis von 2 zu 1 bis 1 zu 2 aufgebaut ist, in Gegenwart eines Katalysators.

Eine weitere Variante zur Herstellung von verzweigten viskoelastischen Polyorganosiloxanen ist die Umsetzung von einem Organosiloxan A mit statistisch verteilten, durchschnittlich weniger als 2 funktionellen Gruppen pro Molekül mit einem Organosiloxan B mit statistisch verteilten, durchschnittlich mehr als 2 funktionellen Gruppen pro Molekül, wobei pro Siloxan A oder B jeweils nur eine Art an funktionellen Gruppen vorliegt, in Gegenwart eines Hydrosilylierungen fördernden Katalysators, wie beispielsweise Platin oder Platinverbindungen.

Weiterhin kann das Antischaummittel auf Basis von Siloxanen 0,1 bis 10 Gew.-%, bevorzugt 0,5 bis 5 Gew.-% mindestens eines Polyorganosiloxans (ab) der allgemeinen Formel (II) enthalten, worin R³ einen Methylrest und R⁴ einen linearen und/oder verzweigten Kohlenwasserstoffrest mit mindestens 6 Kohlenstoffatomen bedeuten, n einen Wert von 0,005 bis 0,5 annimmt und die Summe (n+m) einen Wert von 1,9 bis 2,1 annimmt. Derartige Produkte sind beispielsweise durch alkalisch katalysierte Kondensation von silanolterminierten Polydimethylsiloxanen einer Viskosität 50 bis 50.000 mPas und aliphatischen Alkoholen mit mehr als 6 Kohlenstoffatomen, wie Isotridecylalkohol, n-Octanol, Stearylalkohol, 4-Ethylhexadecanol oder Eicosanol, zugänglich.

In den erfindungsgemäßen Entschäumerformulierungen können weitere bekannte Zusätze oder Hilfsstoffe enthalten sein, beispielsweise weitere Füllstoffe, wie Aluminiumoxid, Metallseifen, hydrophobiertes Quarzmehl oder fein verteilte hydrophobe Polyurethane. Aber auch der Zusatz von als Entschäumeröle wirkenden Substanzen, wie Mineralöle, Paraffinöle, Fettsäureester, Fettalkohole und Wachse in Mengen von 1 bis 99 Gew.-%, bezogen auf das Gesamtgewicht der Formulierung ist möglich. Weiterhin können als Verdicker bekannte Verbindungen, wie Polyacrylsäure, Polyacrylate, Celluloseether wie Carboxymethylcellulose und Hydroxyethylcellulose, natürliche Gume wie Xanthan Gum und Polyurethane, zugesetzt werden.

Das Herstellen der erfindungsgemäßen Entschäumerformulierung erfolgt nach bekannten Verfahren, beispielsweise unter Anwendung von hohen Scherkräften in Kolloidmühlen oder Rotor-Stator-Homogenisatoren. Dabei kann der Mischvorgang bei reduziertem Druck erfolgen, um das Einmischen von Luft, welche in hochdispersen Füllstoffen enthalten ist, zu verhindern.

Bevorzugt ist die Anwendung der erfindungsgemäßen Entschäumerformulierungen in Öl-in-Wasser-Emulsionen (O/W-Emulsionen). Die in den erfindungsgemäßen Entschäumerformulierungen eingesetzten speziellen Polyether-Polysiloxan-Copolymere weisen zwar Tensideigenschaften auf, sie sind jedoch nicht als Emulgatoren für die Bildung von Öl-in-Wasser-Emulsionen, ausgehend von Antischaummitteln auf der Basis von Siloxanen, geeignet. Deshalb enthalten die Entschäumerformulierungen, wenn sie als Emulsionen eingesetzt werden, zusätzlich Emulgatoren, welche O/W-Emulsionen auf der Basis von Siloxanen bilden können. Die Polysiloxan-Polyether-Copolymere können gemeinsam mit dem Antischaummittel emulgiert werden, oder aber auch einfach nach der Emulsionsherstellung zugesetzt werden, da sie für die Bildung der Emulsion nicht erforderlich sind, sondern als Wirkstoff die Effizienz der Entschäumerformulierung erhöhen.

Die erfindungsgemäßen Entschäumerformulierungen in Form von O/W-Emulsionen enthalten vorzugsweise 5 bis 50 Gew.-% Antischaummittel auf Basis von Siloxanen, 0,1 bis 10 Gew.-% des Polyether-Polysiloxan-Copolymeren der allgemeinen Formel (I), 2 bis 20 Gew.-% eines Emulgators sowie Wasser, Konservierungsmittel, Verdicker und weitere Zusätze.

Die zur Herstellung der Emulsionen benötigten Emulgatoren können anionisch, kationisch oder nichtionogen sein und sind dem Fachmann zur Herstellung von stabilen Siliconemulsionen bekannt. Bevorzugt werden Emulgatormischungen eingesetzt, wobei mindestens ein nichtionogener Emulgator, wie beispielsweise Sorbitanfettsäureestern, ethoxylierten Sorbitanfettsäureestern, ethoxylierten Fettsäuren, ethoxylierten linearen oder verzweigten Alkoholen mit 10 bis 20 Kohlenstoffatomen und/oder Glycerinestern, enthalten sein sollte.

Technologien zur Herstellung von Siliconemulsionen sind bekannt. Üblicherweise erfolgt die Herstellung durch einfaches Verrühren aller Bestandteile und anschließendes Homogenisieren mit Rotor-Stator-Homogenisatoren, Kolloidmühlen oder Hochdruckhomogenisatoren.

Die erfindungsgemäßen Entschäumerformulierungen sind überall dort einsetzbar, wo bei Prozessen eine störende Schaumbildung auftritt, die vermindert oder ganz beseitigt werden soll. Das ist z.B. die Anwendung in Wasch- und Reinigungsmitteln, die Bekämpfung von Schaum in Abwasseranlagen, bei Textilfärbeverfahren, bei der Erdgaswäsche, in Dispersionen und in Kohlenwasserstoffen.

Insbesondere sind die erfindungsgemäßen Entschäumerformulierungen hervorragend zum Entschäumen von bei der Zellstoffherstellung anfallenden wässrigen Medien einsetzbar.

### Ausführungsbeispiele

Alle im Folgenden angegebenen Teile und Prozentsätze sind (wenn nicht anders angegeben) auf das Gewicht bezogen. Die Viskositäten beziehen sich auf 25°C.

### A) Herstellung der Siloxanentschäumer

**A1:** 94 Teile Polydimethylsiloxan einer Viskosität von 12.500 mm²/s und 6 Teile einer hydrophilen Kieselsäure wurden mit einer Kolloidmühle (Spalt 0,6 mm) dreimal homogenisiert. Durch 10 stündiges Erhitzen der Mischung auf 190 °C wurde die Kieselsäure in situ hydrophobiert.
**A2**: 400 Teile eines hydroxyterminierten Polydimethylsiloxans einer Viskosität von 65 mm²/s, 40 Teile trimethylsiloxyterminiertes Polydimethylsiloxan einer Viskosität von 40 mm²/s, 4 Teile Methyltrimethoxysilan und 1 Teil eines 0,5%igen Phosphornitridchloridkatalysators wurden auf 100 °C erhitzt. Im Verlauf von 20 Minuten wurde der Druck auf 35 mbar abgesenkt. Danach erfolgte die Neutralisation des Katalysators mit 0,03 Teilen Triisooctylamin.Das erhaltene Polyorganosiloxan wies eine Viskosität von 19.000 mm²/s auf. In 95 Teile dieses Öles wurden 5 Teile einer vorbehandelten hydrophoben Kieselsäure eingearbeitet und mit einer Kolloidmühle homogensiert.
**A3:** Eine Mischung aus 89,3 Teilen eines trimethylsiloxyterminierten Polydimethylsiloxans einer Viskosität von 5.000 mm²/s, 5 Teilen einer pyrogenen hydrophilen Kieselsäure mit einer BET-Oberfläche von 300 m²/g, 0,7 Teilen einer 20%igen methanolischen KOH, 2,5 Teilen eines Siliconharzes aus 40 mol% Trimethylsiloxyeinheiten und 60 mol% SiO_{4/2}-Einheiten und 2,5 Teilen eines Siloxans, das durch Kondensation von Eicosanol mit einem hydroxyterminierten Polydimethylsiloxan einer Viskosität von 65 mm²/s hergestellt wurde, wurden 2 h auf 150 °C erhitzt. Nach Abkühlen wurde die Mischung mit einer Kolloidmühle homogenisiert.

### B) Herstellung der Polyether-Polysiloxan-Copolymere

**B1 bis B9:** Entsprechend der unten in Tabelle 1 angegebenen Struktur wurden das Si-H-haltige Siloxanpolymer der Formel (III), der Diallylpolyether der Formel (IV) und der Monallylpolyether der Formel (V) in Toluol als Lösemittel gemischt. Es wurde ein 5%iger stöchiometrischer Überschuss an ungesättigten Allyl-Gruppen gegenüber der Si-H Gruppe eingesetzt. In Gegenwart von 10 ppm (berechnet als Platin) Speier-Katalysator wurde diese Mischung 3 h unter Rückfluss gekocht. Im Vakuum (100 Pa) wurde das Lösemittel entfernt. In den erhaltenen Produkten war weniger als 5 ppm basisch abspaltbarer Wasserstoff nachweisbar.
**BV1:** Im Vergleichsbeispiel BV1 wurde anstelle eines Diallylpolyethers ein Polydimethylsiloxan, welches an beiden Seiten mit Dimethlyvinylsiloxygruppen terminiert war, verwendet. Allerdings musste dieses Siloxan zuletzt zugegeben werden, da es ansonsten zu einer Gelierung des Produktes kam.
**BV2 und BV3,** wurden analog B1-B9 hergestellt, nur dass kein Diallylpolyether eingesetzt wurde.

**Tabelle 1:**

| Struktur der Polyether-Polysiloxan-Copolymere (entsprechend Formel (I), R=R*= Methyl) | | | | | | | | | | | |
|---|---|---|---|---|---|---|---|---|---|---|---|
| **Beispiel** | **R**^{**1**} | **x** | **y** | **z** | **a** | **b** | **c** | **d** | **e** | **f** | **TP in°C** |
| B1 | CH₃ | 4 | 50 | 1 | 0 | 25 | 0 | 0 | 50 | 0 | 2 |
| B2 | H | 5 | 38 | 0,8 | 0 | 0 | 15 | 10 | 0 | 10 | <1 |
| B3 | C₄H₉ | 4 | 50 | 1 | 24 | 24 | 0 | 0 | 50 | 0 | 8 |
| B4 | C₄H₉ | 5,6 | 700 | 1,4 | 24 | 24 | 0 | 0 | 75 | 0 | <1 |
| B5 | C₄H₉ | 5,6 | 4 | 1,4 | 24 | 24 | 0 | 0 | 75 | 0 | 45 |
| B6 | H | 4 | 50 | 1 | 7 | 28 | 0 | 20 | 80 | 0 | 15 |
| B7 | C₄H₉ | 4,4 | 50 | 0,6 | 24 | 24 | 0 | 0 | 13 0 | 0 | 3 |
| B8 | C₄H₉ | 3,2 | 8 | 0,8 | 10 | 0 | 0 | 0 | 13 0 | 0 | 23 |
| B9 | H | 5 | 75 | 1 | 0 | 3 | 0 | 0 | 75 | 0 | <1 |
| BV 1 | C₄H₉ | 4 | 50 | 1 | 24 | 24 | 0 | mit Siloxan anstelle Polyether verknüpft | | | <1 |
| BV 2 | C₄H₉ | 5 | 50 | 0 | 24 | 24 | 0 | 0 | 0 | 0 | 48 |
| BV 3 | C₄H₉ | 3,4 | 39 | 0 | 16 | 13 | 0 | 0 | 0 | 0 | 52 |

TP ist der Trübungspunkt der an einer wässrigen Lösung die 10 Gew.% des Polyethylenglycol-Polysiloxan-Copolymers und 25 Gew% Diethylenglycolmonobutylether enthielt, bestimmt wurde.

### C) Herstellung und Prüfung der Entschäumerformulierungen

### Prüfung der Wirksamkeit (Schwarzlaugentest):

400 ml Schwarzlauge (Hardwood aus der Verarbeitung von Birken) wurden in einem 1 l Messzylinder mit Waschflaschenaufsatz 15 min mit einem Thermostat auf 80 °C temperiert. Nach Zugabe von 10 mg siliziumorganischen Polymeren (die Summe von Siliconentschäumer A und Polyether-Polysiloxan-Copolymer B) in Form der hergestellten Entschäumformulierung wurde die Schwarzlauge mit einer Geschwindigkeit von 2,3 l/min umgepumpt, immer dann (insgesamt 3 mal), wenn im Messzylinder eine Schaumhöhe von 30 cm erreicht war, wurden sofort 5 mg Silicon zugeben (insgesamt 25 mg Silicon). Es wurde die Zeit t zwischen dem Beginn des Testes und dem Zeitpunkt nach der letzten Zugabe, wenn der Schaum erneut auf 30 cm gestiegen war, gemessen.

Je länger dieser Zeitraum t ist, desto wirksamer ist der Entschäumer.
**C1**: Die Herstellung der Entschäumerformulierungen C11 bis C13, CV11 und CV12 (Vergleichsbeispiele) erfolgte durch einfaches Mischen von 90 Teilen des Antischaummittels auf der Basis von Siloxanen und 10 Teilen des Polyether-Polysiloxan-Copolymers mit einem Labordissolver. Zur Prüfung wurde eine Mischung aus 20 Teilen dieser Entschäumerformulierung und 80 Teilen eines Gemisches aus aliphatischen Kohlenwasserstoffen einer Viskosität von 3 mm²/s und einem Flammpunkt > 100 °C mit einem Labordissolver bei 1.000 min⁻¹ hergestellt.
**C2:** Zur Herstellung der Entschäumerformulierungen C21 bis C27 und CV21 bis CV 23 (Vergleichsbeispiele) wurden 20 Teile Siloxanentschäumers, 5 Teile Sorbitanmonostearat, 5 Teile Polyoxyethylen(40)stearat, und 5 Teile Polyether-Polysiloxan-Copolymers bei 70 °C vermischt. 10 Teile einer 1%igen Lösung von Xanthan-Gum, konserviert mit 0,5 % Formaldehyd, wurden mit einem Flächenrührer bei 600 min⁻¹ eingerührt. Innerhalb von 3 Minuten wurden portionsweise 55 Teile Wasser zugegeben und 15 min bei 1.000 min⁻¹ nachgerührt.
**C3:** Zur Herstellung der Entschäumerformulierungen C31 bis C33 sowie CV31 und CV32 (Vergleichsbeispiele) wurden 20 Teile Siloxanentschäumer, 4 Teile Polyoxyethylen(4)stearat und 2 Teile Polyoxyethylen(40)stearat, bei 70 °C vermischt. Innerhalb von 10 Minuten wurden portionsweise 69 Teile Wasser zugegeben. In die erhaltenen Emulsion wurden abschließend 5 Teile Polyether-Polysiloxan-Copolymer gegeben und 15 min bei 1.000 min⁻¹ nachgerührt.

Rezepturen und Prüfergebnisse sind in Tabelle 2 zusammengestellt.

**Tabelle 2**

| Testergebnisse der Entschäumerformulierungen | | | |
|---|---|---|---|
| **Beispiel** | **Siliconentschäumer** | **Polyether- Polysiloxan-Copo** | **Schwarzlaugentest, t in s** |
| C11 | A3 | B3 | 1200 |
| C12 | A2 | B2 | 1850 |
| C13 | A3 | B7 | 1560 |
| CV11 nicht erfindungsgemäß | A3 | ohne | 450 |
| CV12 nicht erfindungsgemäß | A3 | BV2 | 620 |
| C21 | A1 | B1 | 1120 |
| C22 | A2 | B3 | 2530 |
| C23 | A3 | B4 | 3410 |
| C24 | A1 | B5 | 1070 |
| C25 | A1 | B6 | 1360 |
| C26 | A1 | B8 | 1020 |
| C27 | A1 | B9 | 1590 |
| CV21 nicht erfindungsgemäß | A1 | ohne | 410 |
| CV22 nicht erfindungsgemäß | A1 | BV1 | 590 |
| CV23 nicht erfindungsgemäß | A1 | BV2 | 480 |
| C31 | A1 | B3 | 1350 |
| C32 | A2 | B3 | 1920 |
| C33 | A3 | B3 | 2110 |
| CV31 nicht erfindungsgemäß | A3 | ohne | 540 |
| CV32 nicht erfindungsgemäß | A3 | BV2 | 790 |

Die deutlich verbesserte Wirksamkeit der erfindungsgemäßen Entschäumerformulierungen gegenüber dem Stand der Technik (Vergleichssbeispiele) ist aufgrund der wesentlich höheren Werte für t offensichtlich.

Die Wiederholung der Entschäumerprüfung in einer Softwood-Schwarzlauge (Kiefer) bestätigte die überragende Wirksamkeit der erfindungsgemäßen Entschäumerformulierungen.

## Patentansprüche

1. Entschäumerformulierung enthaltend
(A) Antischaummittel auf der Basis von einer Mischung aus Kieselsäure und Polyorganosiloxanen und
(B) 0,1 bis 40 Gew % eines Polyether-Polysiloxan-Copolymers der allgemeinen Formel 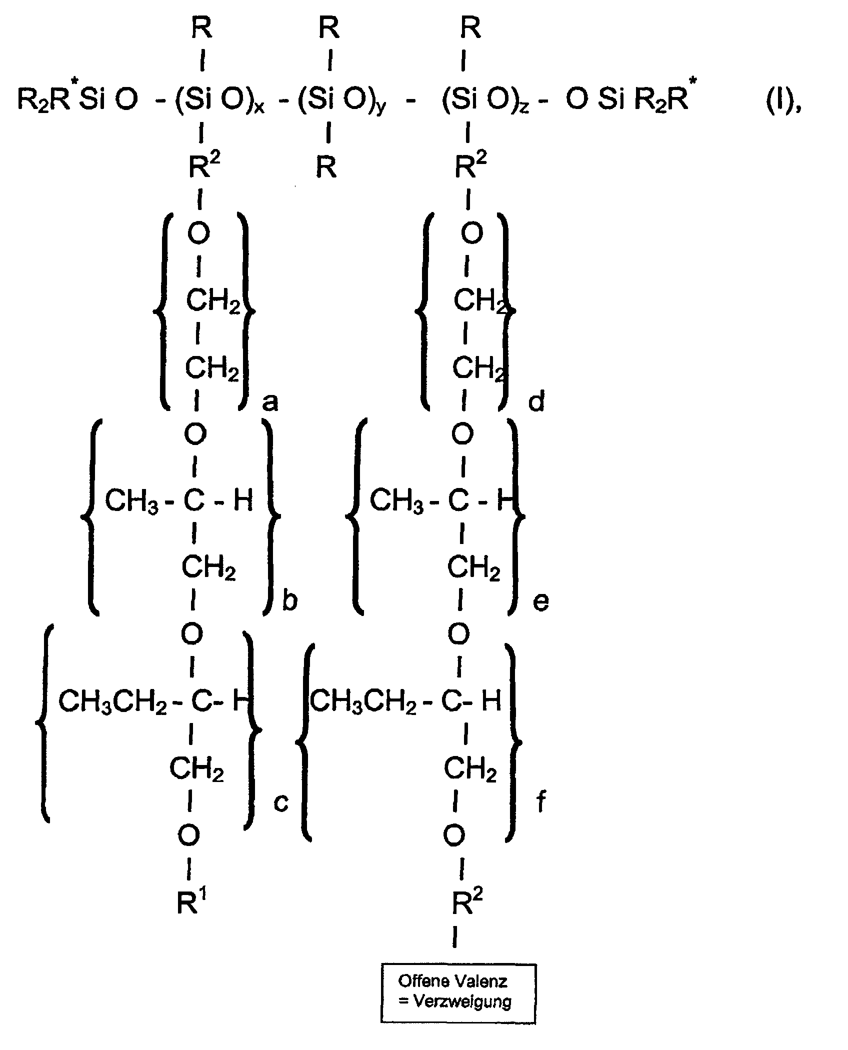
worin R unabhängig voneinander, gleiche oder verschiedene, substituierte und/oder unsubstituierte Kohlenwasserstoffreste mit 1 bis 30 Kohlenstoffatomen, R* entweder R oder eine der Gruppierungen
- R¹O-(CH₂CH₂O)ₐ [CH₂CH(CH₃)O]_{b} [CH₂CH(CH₂CH₃)O]_{c}- R²-
-R²-O-(CH₂CH₂O)_{d} [CH₂CH(CH₃)O]ₑ [CH₂CH(CH₂CH₃)O]_{f}- R²-
und R¹ entweder Wasserstoff oder einen Alkyl-, Aralkyl-, Aryl-, R-C(O)-Rest bedeuten, x einen Wert von 0,1 bis 200, y einen Wert von 1 bis 1000 sowie z einen Wert von 0,01 bis 2,0 annimmt und a, b, c, d, e und f Werte zwischen 0 und 1000 mit der Maßgabe annehmen, dass die Summe aus (a+b+c) und die Summe aus (d+e+f) einen Wert von 2 bis 2000 hat, und R² einen Alkylenrest mit 2 bis 10 Kohlenstoffatomen bedeutet und die offene Valenz wiederum mit einer der Gruppierungen 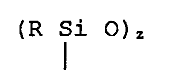 eines Polyether-Polysiloxan-Copolymers der allgemeinen Formel (I) verknüpft ist.

2. Entschäumerformulierung nach Anspruch 1, **dadurch gekennzeichnet, dass** im Polyether-Polysiloxan-Copolymer der allgemeinen Formel (I) a und b Werte zwischen 5 und 50; c, d und f den Wert 0, e einen Wert von 20 bis 150, x einen Wert von 1 bis 10, y einen Wert von 3 bis 100 und z einen Wert von 0,5 bis 1,5 annehmen.

3. Entschäumerformulierung nach Anspruch 1, **dadurch gekennzeichnet, dass** das Polyether-Polysiloxan-Copolymer der allgemeinen Formel (I) einen Trübungspunkt kleiner 15 °C aufweist.

4. Entschäumerformulierung nach Anspruch 1, enthaltend
(A) 1 bis 90 Gew-% Antischaummittel auf Basis von einer Mischung aus Kieselsäure und Polyorganosiloxanen,
(B) 0,1 bis 20 Gew.-% eines Polyether-Polysiloxan-Copolymeren der allgemeinen Formel (I),
(C) 0 bis 20 Gew.-% Emulgatoren,
(D) Wasser, Konservierungsmittel, Verdicker und weitere bekannte Zusätze und Hilfsmittel.

5. Entschäumerformulierung nach Anspruch 1, **dadurch gekennzeichnet, dass** als (A) Antischaummittel auf der Basis von einer Mischung aus Kieselsäure und Polyorganosiloxanen eine Mischung aus
(aa) 1 bis 15 Gew.-% einer in situ hydrophobierten, gefällten und/oder pyrogenen Kieselsäure mit einer BET-Oberfläche größer 50 g/m² und/oder einer vorbehandelten, hydrophoben, gefällten und/oder pyrogenen Kieselsäure mit einer BET-Oberfläche größer 50 g/m²,
(ab) 20 bis 99 Gew.-% eines oder mehrerer Polyorganosiloxane der allgemeinen Formel
R³ ₘ(R⁴O)ₙ SiO_{(4-n-m)/2} (II),
worin R³ unabhängig voneinander, gleiche oder verschiedene, substituierte und/oder unsubstituierte gesättigte und/oder ungesättigte Kohlenwasserstoffreste mit 1 bis 30 Kohlenstoffatomen und R⁴ unabhängig voneinander Wasserstoff oder substituierte und/oder unsubstituierte gesättigte und/oder ungesättigte Kohlenwasserstoffreste mit 1 bis 30 Kohlenstoffatomen bedeutet, n einen durchschnittlichen Wert kleiner 0,5 und die Summe (n+m) einen Wert von 1,8 bis 2,4 aufweist,
(ac) 0 bis 10 Gew.-% eines Siliconharzes, welches im Wesentlichen aus Einheiten der allgemeinen Formel R³SiO_{1/2} und SiO_{4/2} besteht, und
(ad) 0 bis 80 Gew.-% einer organischen Verbindung mit einem Siedepunkt größer als 100 °C, ausgewählt aus Mineralölen, nativen Ölen, Isoparaffinen, Polyisobytylenen, Rückständen aus der Oxoalkoholsynthese, Estern niedermolekularer synthetischer Carbonsäuren, Ethern niedermolekularer Alkohole, Phtalaten und Estern der Phosphorsäure,
enthalten ist.

6. Entschäumerformulierung nach Anspruch 5, **dadurch gekennzeichnet, dass** das Antischaummittel auf Basis von Siloxanen weiterhin 0,1 bis 10 Gew.-% mindestens eines Polyorganosiloxans der allgemeinen Formel (II) enthält, worin R³ einen Methylrest und R⁴ einen linearen und/oder verzweigten Kohlenwasserstoffrest mit mindestens 6 Kohlenstoffatomen bedeuten, n einen Wert von 0,005 bis 0,5 annimmt und die Summe (n+m) einen Wert von 1,9 bis 2,1 annehmen, enthält.

7. Entschäumerformulierung nach Anspruch 4, **dadurch gekennzeichnet, dass** 2 bis 20 Gew.-% Emulgatoren enthalten sind.

8. Entschäumerformulierung nach Anspruch 4, **dadurch gekennzeichnet, dass** der verwendete Emulgator ausgewählt ist aus Sorbitanfettsäureestern, ethoxylierten Sorbitanfettsäureestern, ethoxylierten Fettsäuren, ethoxylierten linearen oder verzweigten Alkoholen mit 10 bis 20 Kohlenstoffatomen und/oder Glycerinestern.

9. Verwendung von Entschäumerformulierungen nach Anspruch 1 zum Entschäumen von bei der Zellstoffherstellung anfallenden wässrigen Medien.

## Claims

1. Antifoam formulation containing
(A) antifoams based on a mixture of silica and polyorganosiloxanes and
(B) 0.1 to 40% by weight of a polyether/polysiloxane copolymer of the general formula 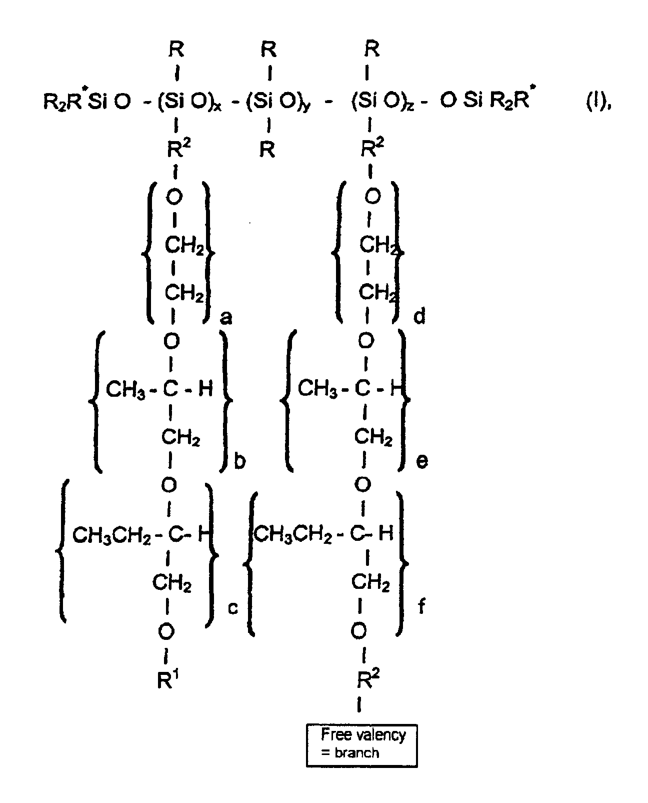
in which R, independently of one another, denote identical or different, substituted and/or unsubstituted hydrocarbon radicals having 1 to 30 carbon atoms, R* denotes either R or one of the groups
- R¹O-(CH₂CH₂O)ₐ [CH₂CH(CH₃)O]_{b} [CH₂CH(CH₂CH₃)O]_{c}- R²-
-R²-O-(CH₂CH₂O)_{d} [CH₂CH(CH₃)O]ₑ [CH₂CH(CH₂CH₃)O]_{f}- R²-
and R¹ denotes either hydrogen or an alkyl, aralkyl, aryl or R-C(O) radical, x assumes a value of 0.1 to 200, y assumes a value of 1 to 1000 and z assumes a value of 0.01 to 2.0 and a, b, c, d, e and f assume values between 0 and 1000, with the proviso that the sum (a+b+c) and the sum (d+e+f) have a value of 2 to 2000, and R² denotes an alkylene radical having 2 to 10 carbon atoms and the free valency is linked in turn to one of the groups 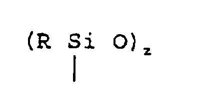 of a polyether/polysiloxane copolymer of the general formula (I).

2. Antifoam formulation according to Claim 1, **characterized in that**, in the polyether/polysiloxane copolymer of the general formula (I), a and b assume values between 5 and 50; c, d, and f assume the value 0, e assumes a value from 20 to 150, x assumes a value from 1 to 10, y assumes a value from 3 to 100 and z assumes a value from 0.5 to 1.5.

3. Antifoam formulation according to Claim 1, **characterized in that** the polyether/polysiloxane copolymer of the general formula (I) has a turbidity point of less than 15°C.

4. Antifoam formulation according to Claim 1, containing
(A) 1 to 90% by weight of antifoam based on a mixture of silica and polyorganosiloxanes,
(B) 0.1 to 20% by weight of a polyether/polysiloxane copolymer of the general formula (I),
(C) 0 to 20% by weight of emulsifiers and
(D) water, preservatives, thickeners and further known additives and auxiliaries.

5. Antifoam formulation according to Claim 1, **characterized in that** a mixture of
(aa) 1 to 15% by weight of a precipitated and/or pyrogenic silica rendered hydrophobic in situ and having a BET surface area greater than 50 g/m² and/or a pretreated, hydrophobic, precipitated and/or pyrogenic silica having a BET surface area greater than 50 g/m²,
(ab) 20 to 99% by weight of one or more polyorganosiloxanes of the general formula
R³ ₘ(R⁴O)ₙ SiO_{(4-n-m)/2} (II)
in which R³, independently of one another, denote identical or different, substituted and/or unsubstituted saturated and/or unsaturated hydrocarbon radicals having 1 to 30 carbon atoms and R⁴, independently of one another, denote hydrogen or substituted and/or unsubstituted saturated and/or unsaturated hydrocarbon radicals having 1 to 30 carbon atoms, n has an average value of less than 0.5 and the sum (n+m) has a value from 1.8 to 2.4,
(ac) 0 to 10% by weight of a silicone resin which essentially comprises units of the general formula R³SiO_{1/2} and SiO_{4/2}, and
(ad) 0 to 80% by weight of an organic compound having a boiling point greater than 100°C, selected from mineral oils, natural oils, isoparaffins, polyisobutylenes, residues from the oxoalcohol synthesis, esters of low molecular weight synthetic carboxylic acids, ethers of low molecular weight alcohols, phthalates and esters of phosphoric acid,
is present as (A) the antifoam based on a mixture of silica and polyorganosiloxanes.

6. Antifoam formulation according to Claim 5, **characterized in that** the antifoam based on siloxanes furthermore contains 0.1 to 10% by weight of at least one polyorganosiloxane of the general formula (II), in which R³ denotes a methyl radical and R⁴ denotes a linear and/or branched hydrocarbon radical having at least 6 carbon atoms, n assumes a value from 0.005 to 0.5 and the sum (n+m) assumes a value from 1.9 to 2.1.

7. Antifoam formulation according to Claim 4, **characterized in that** 2 to 20% by weight of emulsifiers are present.

8. Antifoam formulation according to Claim 4, **characterized in that** the emulsifier used is selected from sorbitan fatty esters, ethoxylated sorbitan fatty esters, ethoxylated fatty acids, ethoxylated linear or branched alcohols having 10 to 20 carbon atoms and/or glyceryl esters.

9. Use of antifoam formulations according to Claim 1 for defoaming aqueous media obtained in pulp production.

## Revendications

1. Composition d'antimousse contenant
(A) un antimousse à base d'un mélange d'acide silicique et de polyorganosiloxanes et
(B) de 0,1 à 40 % en poids d'un copolymère polyéther-polysiloxane de formule générale 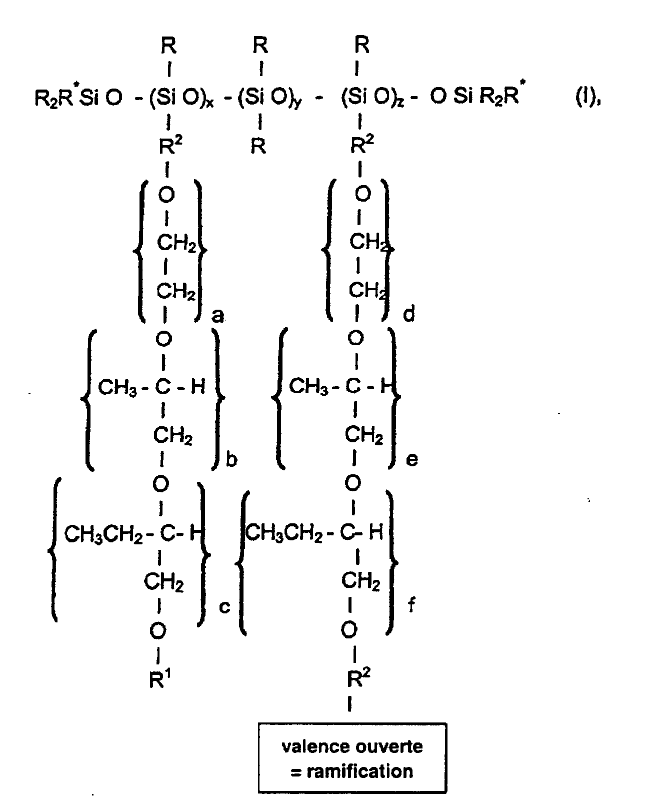
dans laquelle les radicaux R, indépendamment les uns des autres, représentent des radicaux hydrocarbonés identiques ou différents, substitués et/ou non substitués, ayant de 1 à 30 atomes de carbone, R* représente soit R, soit un des groupements
-R¹O-(CH₂CH₂O)ₐ [CH₂CH(CH₃)O]_{b} [CH₂CH(CH₂CH₃)O]_{c}-R²-
-R²O-(CH₂CH₂O)_{d} [CH₂CH(CH₃)O]ₑ [CH₂CH(CH₂CH₃)O]_{f}-R²-
et R¹ représente soit un atome d'hydrogène, soit un radical alkyle, aralkyle, aryle, R-C(O), x a une valeur de 0,1 à 200, y a une valeur de 1 à 1 000 et z a une valeur de 0,01 à 2,0, et a, b, c, d, e et f ont des valeurs comprises entre 0 et 1 000, étant entendu que la somme (a+b+c) et la somme (d+e+f) ont une valeur de 2 à 2 000, et R² représente un radical alkylène ayant de 2 à 10 atomes de carbone, et la valence ouverte est à son tour liée à l'un des groupements 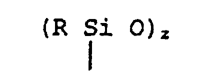 d'un copolymère polyéther-polysiloxane de formule générale (I).

2. Composition d'antimousse selon la revendication 1, **caractérisée en ce que**, dans le copolymère polyéther-polysiloxane de formule générale (I), a et b ont des valeurs comprises entre 5 et 50 ; c, d et f ont la valeur 0, e a une valeur de 20 à 150, x a une valeur de 1 à 10, y a une valeur de 3 à 100 et z a une valeur de 0,5 à 1,5.

3. Composition d'antimousse selon la revendication 1, **caractérisée en ce que** le copolymère polyéther-polysiloxane de formule générale (I) présente un point de trouble inférieur à 15°C.

4. Composition d'antimousse selon la revendication 1, contenant
(A) de 1 à 90 % en poids d'antimousse à base d'un mélange d'acide silicique et de polyorganosiloxanes,
(B) de 0,1 à 20 % en poids d'un copolymère polyéther-polysiloxane de formule générale (I),
(C) de 0 à 20 % en poids d'émulsifiants,
(D) de l'eau, des conservateurs, des épaississants et d'autres additifs et adjuvants connus.

5. Composition d'antimousse selon la revendication 1, **caractérisée en ce qu'**elle contient en tant que (A) antimousse à base d'un mélange d'acide silicique et de polyorganosiloxanes un mélange de
(aa) 1 à 15 % en poids d'un acide silicique précipité et/ou pyrogéné, rendu hydrophobe in situ, ayant une surface BET de plus de 50 g/m² et/ou d'un acide silicique précipité et/ou pyrogéné, prétraité, hydrophobe ayant une surface BET de plus de 50 g/m²,
(ab) 20 à 99 % en poids d'un ou plusieurs polyorganosiloxanes de formule générale
R³ ₘ(R⁴O)ₙ SiO_{(4-n-m)/2} (II),
dans laquelle les radicaux R³, indépendamment les uns des autres, représentent des radicaux hydrocarbonés identiques ou différents, substitués et/ou non substitués, saturés ou insaturés, ayant de 1 à 30 atomes de carbone, et les radicaux R⁴, indépendamment les uns des autres, représentent un atome d'hydrogène ou des radicaux hydrocarbonés substitués et/ou non substitués, saturés ou insaturés, ayant de 1 à 30 atomes de carbone, n a une valeur moyenne inférieure à 0,5 et la somme (n+m) a une valeur de 1,8 à 2,4,
(ac) 0 à 10 % en poids d'une résine silicone qui consiste essentiellement en motifs de formule générale R³SiO_{1/2} et SiO_{4/2}, et
(ad) 0 à 80 % en poids d'un composé organique ayant un point d'ébullition supérieur à 100°C, choisi parmi des huiles minérales, des huiles natives, des isoparaffines, des polyisobutylènes, des résidus de la synthèse d'oxoalcools, des esters d'acides carboxyliques synthétiques de faible masse moléculaire, des éthers d'alcools de faible masse moléculaire, des phtalates et des esters de l'acide phosphorique.

6. Composition d'antimousse selon la revendication 5, **caractérisée en ce que** l'antimousse à base de siloxanes contient en outre de 0,1 à 10 % en poids d'au moins un polyorganosiloxane de formule générale (II), dans laquelle R³ représente un radical méthyle et R⁴ représente un radical hydrocarboné linéaire et/ou ramifié ayant au moins 6 atomes de carbone, n a une valeur de 0,005 à 0,5 et la somme (n+m) a une valeur de 1,9 à 2,1.

7. Composition d'antimousse selon la revendication 4, **caractérisée en ce qu'**elle contient de 2 à 20 % en poids d'émulsifiants.

8. Composition d'antimousse selon la revendication 4, **caractérisée en ce que** l'émulsifiant utilisé est choisi parmi des esters d'acides gras et de sorbitanne, des esters d'acides gras et de sorbitanne éthoxylés, des acides gras éthoxylés, des alcools linéaires ou ramifiés éthoxylés ayant de 10 à 20 atomes de carbone et/ou des esters de glycérol.

9. Utilisation de compositions d'antimousses selon la revendication 1, pour l'élimination de mousse de milieux aqueux produits dans la fabrication de la cellulose.
